# EUROPÄISCHE PATENTANMELDUNG

(11) **EP 1 526 225 A2**
(43) Veröffentlichungstag der Anmeldung: **27.04.2005**
(21) Anmeldenummer: 04024747.0
(22) Anmeldetag: 18.10.2004
(51) Int. Cl.: E04F 15/02, E04F 15/18

(54) **Bewehrungsanordnung für steife, hoch belastbare Oberflächenbeläge auf flächigen Untergründen, insbesondere für Platten -oder Fliesenbeläge**

(30) Priorität: 22.10.2003 DE 20316204 U
(71) Anmelder: Gutjahr, Walter, 64404 Bickenbach (DE)
(72) Erfinder: Gutjahr, Walter, 64404 Bickenbach (DE)
(74) Vertreter: Helber, Friedrich G., Dipl.-Ing.

(57) **Zusammenfassung**

Bewehrungsanordnung für den Aufbau von steifen, hoch belastbaren Belägen auf großflächigen Untergründen, insbesondere Platten- oder Fliesenbelägen (14) mit zwischen der Unterseite der Beläge (14a, 14b) und dem Untergrund vorzusehenden Bewehrungselementen.

Die Bewehrungselemente (18) weisen jeweils wenigstens einen im Wesentlichen ebenflächigen Träger (22) aus dünnem metallischen Bandmaterial oder Blech auf, auf dessen dem aufzubringenden Belg (14) zugewandter raumseitiger Fläche Verankerungsmittel vorgesehen sind, welche eine form- und/oder stoffschlüssige festhaftende Verbindung mit der bei der Verlegung des Belags in noch bildsamem Zustand aufzubringenden Mörtel- oder Kleber-Zwischenschicht (20) nach deren Abbinden gewährleisten.

## Beschreibung

Die Erfindung betrifft eine Bewehrungsanordnung für den Aufbau von steifen, hoch belastbaren Belägen auf großflächigen Untergründen, insbesondere Platten- oder Fliesenbelägen mit zwischen der Unterseite der Beläge und dem Untergrund vorzusehenden Bewehrungselementen.

Bei der Erstellung von Platten- oder Fliesenbelägen auf vorhandenen Untergründen stellt sich häufig das Problem, dass aufgrund von baulichen Gegebenenheiten für den Belag nur eine geringe Aufbauhöhe zur Verfügung steht. Bei starren, hoch belastbaren Untergründen, wie Betonplatten oder Zementestrich-Lagen können Fliesen oder andere Plattenbeläge direkt auf Oberflächen des Untergrunds mittels Kleber oder Klebemörtel verlegt werden, so dass in diesem Fall also ein Fliesen- bzw. Plattenbelag mit einer Aufbauhöhe verwirklichbar ist, welcher die Dicke der verlegten Fliesen oder Platten nicht wesentlich übersteigt. Schwieriger stellt sich das Problem der Erstellung solcher Beläge auf nicht starren Untergründen, beispielsweise auf zum Zweck der Wärme- oder Schalldämmung mit Schaumkunststoffen belegten bzw. - bei der Sanierung von Altbauten - elastisch federnden Holzböden oder auf an sich starren aber nicht hinreichend punktbelastbaren Untergründen dar. In diesen Fällen muss in der Regel zunächst eine in der geforderten Weise hoch belastbare Tragschicht aus einem - gegebenenfalls sogar armierten - Zementestrich o.dgl. erstellt werden, woraus zwangsläufig eine große Aufbauhöhe resultiert.

Der Erfindung liegt demgegenüber die Aufgabe zugrunde, die Möglichkeit des Aufbaus von steifen, hoch belastbaren Oberflächenbelägen, insbsondere Platten- oder Fliesenbelägen zu schaffen, welche auch auf an sich weichen oder nicht tragfähigen Untergründen eine geringe Aufbauhöhe der aufzubringenden Beläge ermöglicht.

Ausgehend von einer Bewehrungsanordnung der eingangs erwähnten Art wird diese Aufgabe erfindungsgemäß dadurch gelöst, dass die Bewehrungselemente jeweils wenigstens einen im Wesentlichen ebenflächigen Träger aus dünnem metallischem Bandmaterial oder Blech aufweisen, auf dessen dem aufzubringenden Belag zugewandter Oberseite Verankerungsmittel vorgesehen sind, welche eine form- und/oder stoffschlüssig festhaftende Verbindung mit der bei der Verlegung des Belags in noch bildsamem Zustand aufzubringenden Mörtel- oder Kleber-Zwischenschicht nach deren Abbinden gewährleisten. Durch die Verwendung von ebenflächigen Trägern aus dünnem metallischen Bandmaterial oder Blech als Bewehrungselemente, welche auf ihrer dem aufzubringenden Plattenbelag zugewandten Oberseite so ausgebildet sind, dass sie eine hoch beanspruchbare Verbindung mit den aufzubringenden Platten eingehen, wird durch die Verbindung der Träger mit dem Plattenbelag mittels der Mörtel- oder Kleber-Zwischenschicht ein Verbund erreicht, der nur eine geringe zusätzliche Aufbauhöhe im Vergleich zu direkt verklebten Plattenbelägen aufweist, dabei aber durch den nach dem Abbinden des Mörtels oder der Kleber-Zwischenschicht erzielten starren Verbund zwischen den Plattenbelägen und den als Bewehrungselementen verwendeten Trägern auch eine hohe Biegesteifigkeit aufweist, so dass örtlich konzentrierte Beanspruchungen auf der Belagsoberfläche im Untergrund großflächig abgetragen werden.

Die Verankerungsmittel können gemäß einem ersten Ausführungsbeispiel der Erfindung von einer Vielzahl von in regelmäßiger oder unregelmäßiger Verteilung voneinander beabstandeten, von der Oberseite des im Wesentlichen ebenflächigen Trägers vortretenden Vorsprüngen gebildet werden, die also nach dem Abbinden oder Aushärten der verbindenden Mörtel- oder Kleber-Zwischenschicht formschlüssig in dieser Zwischenschicht verankert sind. Als besonders geeignet hat sich eine Ausgestaltung erwiesen, bei welcher die Vorsprünge von von der Oberseite des im Wesentlichen ebenflächigen Trägers vortretenden Verzahnungslappen aus dünnem metallischen Bandmaterial oder Blech gebildet werden.

Dabei können die Verzahnungslappen von entlang des größeren Teils ihrer Ränder aus dem Material des Trägers freigestanzten und entlang einer Biegelinie im nicht freigestanzten Bereich hochgebogenen Abschnitte des Materials des Trägers selbst gebildet sein.

Zweckmäßig ist dabei dann eine Ausgestaltung, bei welcher die Verzahnungslappen um einen Winkel von weniger als 90° in Bezug auf die Oberseite des im Wesentlichen ebenflächigen Trägers hochgebogen sind, wodurch eine großflächige Einbettung der Verzahnungslappen in der Mörtel- bzw. Kleber-Zwischenschicht erhalten wird, ohne dass eine große Schichthöhe dieser Zwischenschicht erforderlich ist.

Um eine möglichst gleichmäßige Biegesteifigkeit des erzeugten Verbunds zu erreichen ist es von Vorteil, wenn die Verzahnungslappen um Biegelinien hochgebogen sind, die in Bezug auf die Biegelinien benachbarter Verzahnungslappen unter einem Winkel verlaufen.

Die Verzahnungslappen können gleichzeitig als auf der Oberseite der Träger Halterungszungen für die Festlegung von Leitungen, beispielsweise Widerstandskabeln für elektrische Fußbodenheizungen oder von einem flüssigen Wärmemedium durchströmten Rohrleitungen geringen Durchmessers geignet ausgebildende Befestigungselemente ausgestaltet sein.

Alternativ können aber auch zusätzlich zu den Verzahnungslappen gesonderte Haltezungen zur Fixierung von Leitungen auf der Oberseite der Träger vorgesehen sein.

Um die im Wesentlichen ebenflächigen Träger für die Erstellung von großflächigen Belägen einzusetzen, empfiehlt es sich, sie in der Draufsicht so zu begrenzen, dass sie mit im Wesentlichen fugenlos aneinander anliegenden Begrenzungsrändern zu Trägerflächen wählbarer Größe zusammenlegbar sind. Neben quadratischen oder rechteckigen Begrenzungen der Träger kommen hier auch solche Ausgestaltungen in Frage, bei welchen die Einzelträger fischgrätmusterartig verlegt werden können. Auch die mit Umrissformen, wie sie zur Erstellung von beispielsweise Garageneinfahrten verwendete Formsteine aufweisen, können geeignete Träger-Verbundflächen hergestellt werden. Insbesondere die bei solchen Formsteinen bekannte Knochenform eignet sich in diesem Zusammenhang in besonderem Maße.

Um die Beanspruchbarkeit des durch die erfindungsgemäße Bewehrungsanordnung erzielten Verbunds der auch bei partieller Rissbildung in der verwendeten Mörtel- oder Kleber-Zwischenschicht zu gewährleisten, empfiehlt es sich, Mittel zur in der Ebene der Trägerfläche zugbeanspruchbaren Verbindung der Rand-Begrenzungsbereiche von jeweils benachbarten, zu einer größeren Trägerfläche zusammenlegbaren Trägern vorzusehen.

Die Rand-Begrenzungsbereiche der Träger können dabei mit in Formschluss mit benachbarten anzulegenden Trägern bringbaren, komplementär geformten Ansätzen und Aussparungen versehen sein. Alternativ können in den Randbereichen der Träger auch jeweils zum benachbart anzulegenden Träger offene Aussparungen oder geschlossene Durchgangsöffnungen vorgesehen sein, in welche jeweils die Ränder von benachbarten Trägern formschlüssig verbindende Verbindungselemente einsetzbar sind.

Solche Verbindungselemente können beispielsweise über den Rändern von zwei benachbarten zu verbindenden Trägern platzierbare, im Wesentlichen ebenförmige Stegabschnitte aufweisen, an deren gegenüberliegenden Enden in formschlüssigen Eingriff mit zugehörigen Aussparungen oder Durchgangsöffnungen im Träger einbringbare Ansätze vorgesehen sind.

Dabei können die Verbindungselemente zum Beispiel die Form einer im Querschnitt im Wesentlichen U-förmigen Klammer mit von den Enden des Stegabschnitts im Wesentlichen rechtwinklig umgekanteten kurzen U-Schenkeln haben.

Alternativ können mehrere solcher Klammern auch zu einem Verbindungselement zusammengefasst werden, bei welchem der im Wesentlichen ebenflächige Stegabschnitt sich über wenigstens einen Teil der Länge der Ränder von zwei benachbarten zu verbindenden Trägern erstreckt, wobei dann von den Rändern des Stegabschnitts eine Anzahl von in dessen Längsrichtung beabstandeten kurzen umgekanteten U-Schenkeln vorgesehen sind, welche in jeweils eine zugehörige Durchgangsöffnung im Randbereich des zugeordneten Trägers in formschlüssigen Eingriff bringbar sind.

Bei einem alternativen Ausführungsbeispiel kann die Ausgestaltung auch so getroffen sein, dass die Träger der Bewehrungselemente im Wesentlichen rechteckig oder quadratisch begrenzt sind und in zwei Randbereichen mit jeweils einer Anzahl von gleichmäßiger Teilung angeordneten vorstehenden Ansätzen und in den beiden anderen Randbereichen mit jeweils einer Anzahl von in gleichmäßiger Teilung vorgesehenen, die Ansätze im Randbereich des Trägers eines mit dem Bewehrungselements zu einer größeren Trägerfläche zu verbindenden weiteren Bewehrungselementen passend aufnehmenden Durchgangsöffnungen versehen sind. In diesem Fall überlappen sich also die Randbereiche von benachbarten, zur größeren Trägerfläche zu verbindenden Trägern bzw. Bewehrungselementen.

Die Ansätze können dabei von an gegenüberliegenden Enden aus dem jeweiligen Randbereich freigeschnitten und anschließend hochgekanteten Lappen gebildet werden, wobei die Durchgangsöffnungen dann von dem jeweiligen Randbereich eingestanzten Schlitzen gebildet werden, die so bemessen sind, dass sie die hochgekanteten Lappen benachbarter Bewehrungselemente passend aufnehmen.

Um zu verhindern, dass in großflächigen Trägerflächen in den Eckpunkten von jeweils vier miteinander verbundenen Bewehrungselementen insgesamt das Material von vier Trägerflächen übereinander liegt, empfiehlt es sich, das Material der Träger im Bereich von jeweils rechtwinklig zueinander verlaufenden Begrenzungskanten der Träger gebildeten Ecken unter einem Winkel von 45° abzuschneiden. Dadurch wird dann erreicht, dass in den Verbindungsbereichen benachbarter Bewehrungselemente Überlappungen nur eine Stärke der Materialdicke von zwei Trägern aufweisen können.

Anstelle von frei gestanzten und hochgebogenen Verzahnungslappen können die Verankerungsmittel auch von aus dem Material der Träger rechtwinklig zu deren Flachseiten hochgeprägten Profilvorsprüngen gebildet sein.

Als Verankerungsmittel können auch gesondert hergestellte und fest haftend auf der Oberseite der Träger angeordnete Verankerungselemente vorgesehen sein. Die Verankerungselemente sind dann zweckmäßig festhaftend in einer ausgehärteten oder abgebundenen, auf der Oberseite des Trägers in fließfähigem Zustand aufgebrachten Schicht eines Haftvermittler verankert.

Die Verankerungselemente ihrerseits können von mineralischen oder metallischen Partikeln oder Teilchen gebildet sein, deren durchschnittliche Partikel- bzw. Teilchengröße größer als die Schichtdicke der abgebundenen oder ausgehärteten Haftvermittler-Schicht sein kann. Die aus der abgebundenen bzw. abgehärteten Kleber-Schicht vortretenden Teile der Partikel oder Teilchen stellen dann die eigentlichen Verankerungselemente dar.

Gemäß einem weiteren Ausführungsbeispiel der Erfindung können die Verankerungsmittel auch von jeweils einer fest haftend auf dem jeweiligen Träger aufgebrachten Lage aus hartem Plattenmaterial gebildet werden, dessen trägerabgewandte Oberseite eine für die haftende Verlegung von Platten- oder Fliesenbeläge mittels abbindendem oder aushärtendem Mörtel bzw. Kleber geeignet ausgebildete Oberflächenstrukturierung aufweist. Als geeignetes Plattenmaterial kommen hierbei faserverstärkte Hartplatten, wie Gips-Faserplatten, Recycling-Faserplatten etc. in Frage.

Die Erfindung ist in der folgenden Beschreibung anhand der Zeichnung näher erläutert, und zwar zeigt:
- Fig. 1: eine senkrechte Schnittansicht durch einen Teilabschnitt eines unter Einsatz der erfindungsgemäßen Bewehrungsanordnung auf einer mit einer Schaum-Kunststofflage als Wärme- und Schalldämmung belegten Bodenplatte aufgebrachten Fliesenbelag;
- Fig. 2: eine Draufsicht auf einen Teilabschnitt eines Ausführungsbeispiels eines als dünner ebenflächiger Träger aus Metallblech ausgebildten Bewehrungselements für den Fliesenbelag gemäß Figur 1;
- Fig. 3: eine Schnittansicht entlang der Pfeile 3-3 in Figur 2 in vergrößertem Maßstab;
- Fig. 4: eine Draufsicht auf vier in Aneinanderlage zu einer größeren Bewehrungs- bzw. Trägerfläche miteinander verbundenen, rechteckig begrenzten Bewehrungselementen;
- Fig. 5: eine Teilschnittansicht, gesehen in Richtung der Pfeile 5-5 in Figur 4 in vergrößertem Maßstab;
- Fig. 6: eine der Figur 5 entsprechende Schnittansicht mit abgewandeltem Verbindungselement für die benachbarten Träger;
- Fig. 7: eine Draufsicht auf einen Teilbereich zweier miteinander zu verbindender Träger, wobei eine integral vom Rand eines der Träger vorspringende Verbindungszunge dargestellt ist, deren abgewinkeltes freies Ende in eine Durchgangsöffnung im anderen Träger formschlüssig eingreift;
- Fig. 8: eine Schnittansicht, in Richtung der Pfeile 8-8 in Figur 7;
- Fig. 9: eine Draufsicht auf eine gegenüber dem Ausführungsbeispiel gemäß den vorstehenden Figuren 7 und 8 abgewandelten Bewehrungselements, welches mit weiteren gleichartigen Bewehrungselementen mit überlappenden Randbereichen zu einer größeren Bewehrungsfläche verbindbar ist;
- Fig. 10: zwei miteinander verbundene Bewehrungselemente gemäß Fig. 9 in verkleinertem Maßstab;
- Fig. 11: eine Schnittansicht durch die überlappenden Randbereiche der miteinander verbundenen Befestigungselemente, gesehen in Richtung der Pfeile 11-11 in Fig. 10 in vergrößertem Maßstab;
- Fig. 12: einen Teilabschnitt der Ränder von zwei benachbarten Bewehrungs-Trägern, deren Randbereiche durch spezielle Ausformung formschlüssig ineinander eingreifend ausgebildet sind;
- Fig. 13: eine Draufsicht auf einen als Bewehrungselement dienenden dünnen metallischen Träger ohne Darstellung der speziellen Verankerungsmittel, dessen Umrissform so ausgebildet ist, dass er mit gleichartigen Trägern zu einer formschlüssig verzahnten Trägerfläche verlegbar ist;
- Fig. 14: einen Teilausschnitt einer unter Verwendung von Trägern gemäß Figur 13 zusammengefügten Trägerfläche; und
- Fig. 15: einen senkrechten Schnitt durch ein abgewandeltes Ausführungsbeispiel eines erfindungsgemäßen ebenflächigen Trägers aus dünnem Blechmaterial, welcher mit einer faserverstärkten starren Hartplatte als Verankerungsmittel fest haftend verbunden ist.

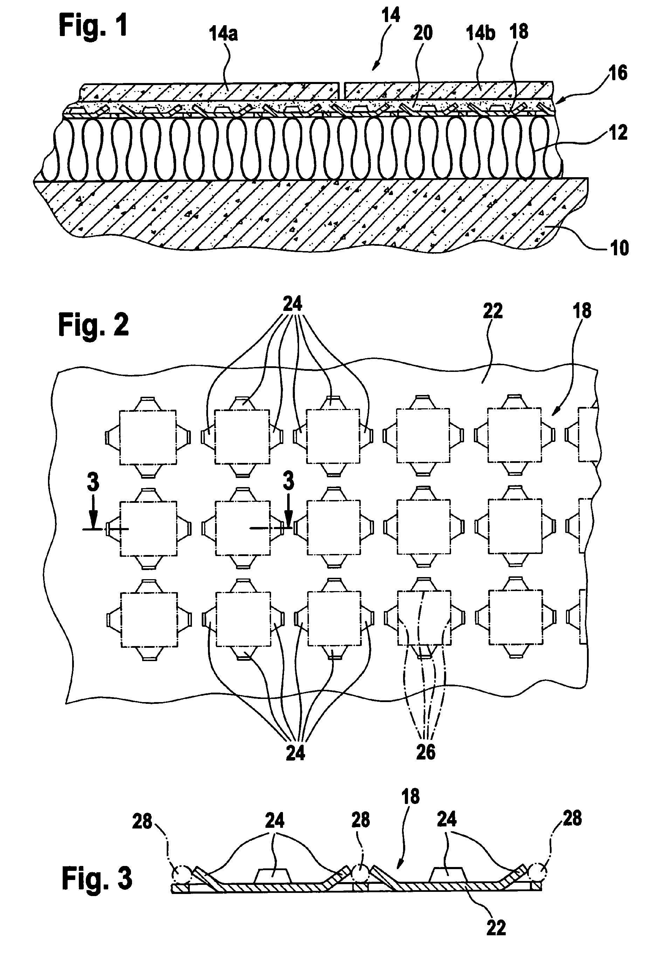

In Figur 1 ist ein senkrechter Schnitt durch einen Teilabschnitt einer Beton-Bodenplatte 10 mit einer zur Trittschalldämmung aufgebrachten Schaumkunststoff-Lage 12 gezeigt, auf welcher unter Einsatz einer erfindungsgemäßen Bewehrungsanordnung ein Fliesenbelag 14 aufgebracht ist.

Die Bewehrungsanordnung 16 wird von einer im dargestellten Fall lose auf der Oberseite der Schaumkunststoff-Lage 12 aufgelegten Schicht von Bewehrungselementen 18 der nachstehend in Verbindung mit den Figuren 2 und 3 noch näher erläuterten Art gebildet, auf welche eine dünne Schicht 20 eines in bildsamem Zustand aufgebracht Mörtels oder Klebers aufgetragen wurde, auf welcher in noch unabgebundenem bzw. nicht ausgehärtetem Zustand Fliesen 14a, 14b etc. verlegt wurden. Nach dem Abbinden bzw. Aushärten des Mörtels bzw. Klebers bilden die Fliesen den Fliesenbelag 14, welcher mit den in der Mörtel- bzw. Kleber-Schicht 20 verankerten Bewehrungselementen 18 einen fest haftenden und biegesteifen Verbund bildet, der auf die Oberseite der Fliesen einwirkende Gewichtskräfte und Beanspruchungen großflächig auf der Schaumkunststoff-Lage abträgt.

Die in den Figuren 2 und 3 als Teilabschnitte gezeigten Bewehrungselemente 18 bestehen aus einem ursprünglich ebenflächigen dünnen metallischen Bandmaterial oder Metallblech als Träger 22, von dessen dem aufzubringenden Belag - d.h. im Fall der Figur 1 dem Fliesenbelag 14 - zugewandter Oberseite Verankerungsmittel in Form von entlang dreier Seiten aus dem Metallblech freigestanzten Verankerungslappen 24 vorstehen, welche jeweils um eine Biegelinie 26 im verbleibenden nicht freigestanzten Bereich des Trägers in eine schräg zur Oberfläche des Trägers verlaufende Lage hochgebogen sind. Durch die in Figur 2 und 3 erkennbare, abwechselnd in entgegengesetzte Richtungen um rechtwinklig zueinander verlaufende Biegelinien 26 schräg hochgebogene Lage der in Längs- und Querrichtung aufeinanderfolgenden Verankerungslappen 24 wird erreicht, dass die Verankerungslappen in abgebundenem bzw. ausgehärtetem Zustand der Kleber- bzw. Mörtel-Schicht 20 gegen Herausziehen gesichert gehalten sind. Die Bewehrungselemente 18 und der mit diesen über die Mörtel- bzw. Kleber-Schicht 20 fest verbundene Fliesenbelag 14 bilden somit einen biegesteifen Belagsaufbau, welcher auf die Oberseite des Fliesenbelags 14 einwirkende statische Kräfte ebenso wie kinematische Belastungen großflächig auf die Schaumkunststoff-Lage 12 überträgt. Durch die flächige Verteilung werden auch hohe Lasten ohne Beschädigung der Struktur des Schaumkunststoffs übertragen, welche den Schaumkunststoff bei örtlich konzentrierter Einwirkung komprimieren oder zerstören würden.

In Figur 3 sind schematisch noch auf die Oberseite der Träger 22 aufgelegte und durch die schräg geneigt verlaufende Verzahnungslappen 24 in ihrer Lage gehaltene Leitungen 28 strichpunktiert angedeutet, welche vor dem Aufbringen der Kleber- oder Mörtelschicht auf den Träger 22 aufgebracht werden können. Diese Leitungen 28 können beispielsweise elektrische Widerstands-Heizleitungen oder hohle rohrförmige, von erhitztem oder abgekühltem Wärmeträgermedium durchströmbare Rohrleitungen geringen Durchmessers sein, so dass mit der erfindungsgemäßen Bewehrungsanordnung 16 also gleichzeitig eine Fußbodenheizung bzw. -kühlung verwirklichbar ist. Alternativ könnten solche elektrischen Widerstandsheizleitungen bzw. von flüssigem Wärmeträgermedium durchströmbare Leitungen auch in Kanälen verlegt sein, die in von der Oberseite aus in die Kunststoffschaum-Schicht eingeschnittenen (nicht gezeigten) Kanälen verlegt sind. Durch den auf der Lage 12 aufliegenden Träger 18 aus Metallblech erfolgt dann eine flächige Verteilung der von unten zugeführten Wärmeenergie, wodurch eine gleichmäßige flächige Temperierung bzw. Abkühlung der den Fliesenbelag 14 bildenden Fliesen 14a, 14b erhalten wird.

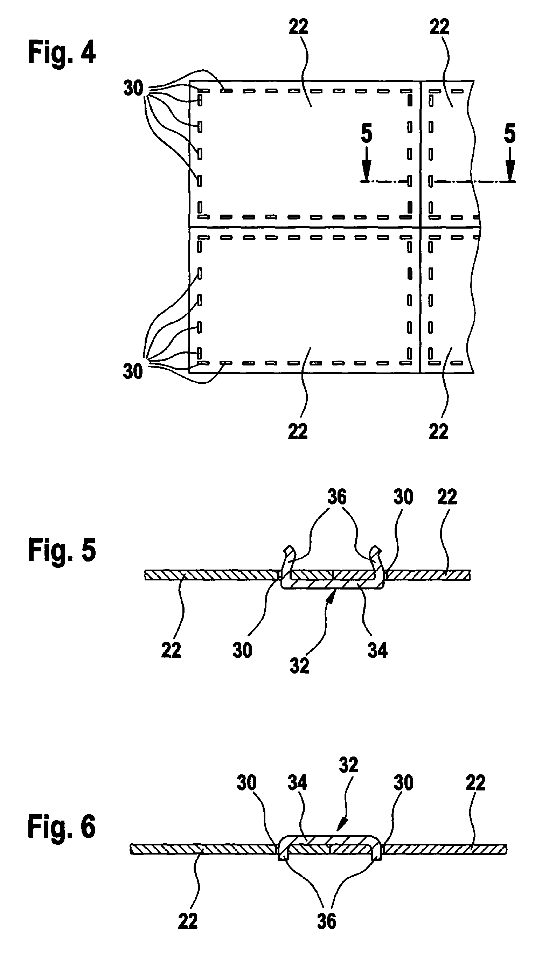

In Figur 4 sind zwei rechteckig begrenzte, mit jeweils einer ihrer längeren Rechteck-Längsränder aneinander anliegend angeordnete Träger 22 und zwei weitere, jeweils an den in der Figur rechts liegenden Rechteck-Querrändern anliegend angeordnete Teilabschnitte von Trägern 22 gezeigt, wobei der Übersichtlichkeit halber die zur Oberseite hochgebogenen Verzahnungslappen 24 nicht dargestellt sind. Gezeigt sind aber in den Randbereichen der Träger 22 in geringem Abstand von dereren Längs- und Querrändern jeweils mit Abstand zueinander vorgesehene schlitzartige Durchgangsöffnungen 30, welche eine Verbindung der einzelnen Träger 22 zu gröβeren Trägerflächen ermöglichen.

In Figur 5 ist im Schnitt eine Verbindungsmöglichkeit zweier Träger durch eine im Wesentlichen U-förmige Klammer 32 gezeigt. Die Klammer 32 besteht aus einem dünnen ebenflächigen Stegabschnitt 34, von dessen Enden jeweils kurze U-Schenkel 36 umgebogen sind. Zur Verbindung benachbarter Träger 22 werden die Schenkel 36 von der Träger-Unterseite aus durch jeweils fluchtende schlitzartige Durchgangsöffnungen 30 in den Randbereichen von benachbarten zu verbindenden Trägern 22 hindurchgesteckt. Dabei können die Durchgangsöffnungen 30 in den Trägern 22 durchaus mit einigem Übermaß gegenüber den Querschnitten der Schenkel 36 der Klammern 32 bemessen sein. Das Material der später aufgebrachten Kleber- bzw. Mörtelschicht fließt beim Aufbringen in die zwischen den U-Schenkeln und den Durchgangsöffnungen bestehenden Spalten. Nach dem Abbinden oder Aushärten der Mörtel- bzw. Kleberschicht wird dann eine spielfreie Verbindung der Träger 22 erhalten.

Figur 6 zeigt eine Abwandlung der in Figur 5 veranschaulichten Verbindung, bei welcher die Verbindungsklammer 32 nach dem Aneinanderlegen der Ränder der Träger 22 von der Oberseite der Träger 22 montiert wird, indem der Stegabschnitt 34 der Klammern 32 jeweils mit nach unten weisenden Schenkeln 36 in die zugeordneten Durchgangsöffnungen 30 eingedrückt wird.

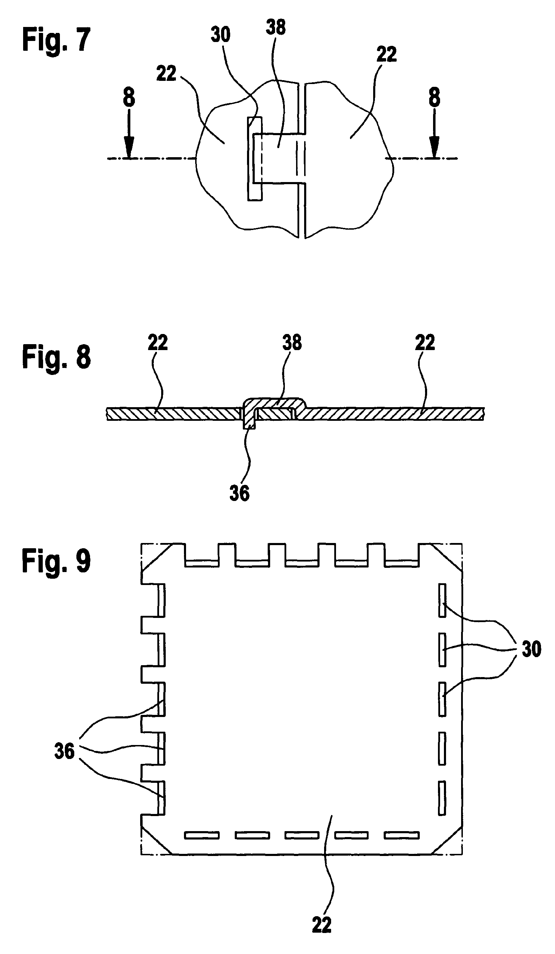

In Figur 7 und 8 ist eine Verbindung von Trägern 22 veranschaulicht, bei welcher an dem in der Zeichnung rechts liegenden Träger 22 integral eine Zunge 38 angeschnitten ist, von deren freiem Ende wiederum ein kurzer Schenkel 36 nach unten abgekantet ist. Die im Randbereich um etwa das Dickenmaß des Trägers 22 zweimal gegensinnig umgekröpfte Zunge 38 wird also auf den Randbereich des anschließenden Trägers 22 aufgelegt und der kurze Schenkel 36 in eine in diesem Träger vorgesehene schlitzartige Durchgangsöffnung 30 eingeschoben.

Die in den Figuren 9 bis 11 dargestellten Bewehrungselemente weisen im Wesentlichen quadratische ebenflächige Träger 22 aus dünnem metallischem Bandmaterial auf, welche entlang von zwei rechtwinklig zusammentreffenden Randbereichen mit den schlitzartigen Durchgangsöffnungen 30 der vorstehend beschriebenen Ausführungsbeispiele entsprechenden Durchgangsöffnungen 30 versehen sind. Anstelle von gesonderten Klammern 32 oder am Rand des Trägers 22 angeschnittene Zungen 38 mit jeweils an den Enden umgekanteten Schenkeln 36 sind in diesem Fall jedoch an den beiden anderen rechtwinklig aneinander anschließenden Randbereichen der Träger 22 der Befestigungselemente freigeschnittene und anschließend hochgekantete Lappen 36 vorgesehen, welche in die Durchgangsöffnungen 30 von anschließenden Befestigungselementen einsetzbar sind. Das bedingt dann aber, dass sich die Randbereiche von miteinander zu verbindenden Trägern überlappen. Um dann in den entstehenden Eckpunkten von vier zu verbindenden Trägern eine vierschichtige Übereinanderlage des Materials der Träger 22 zu vermeiden, sind die Randbereiche der Träger in den - in Fig. 9 strichpunktiert dargestellten - Eckbereichen jeweils unter einem Winkel von 45° abgeschnitten.

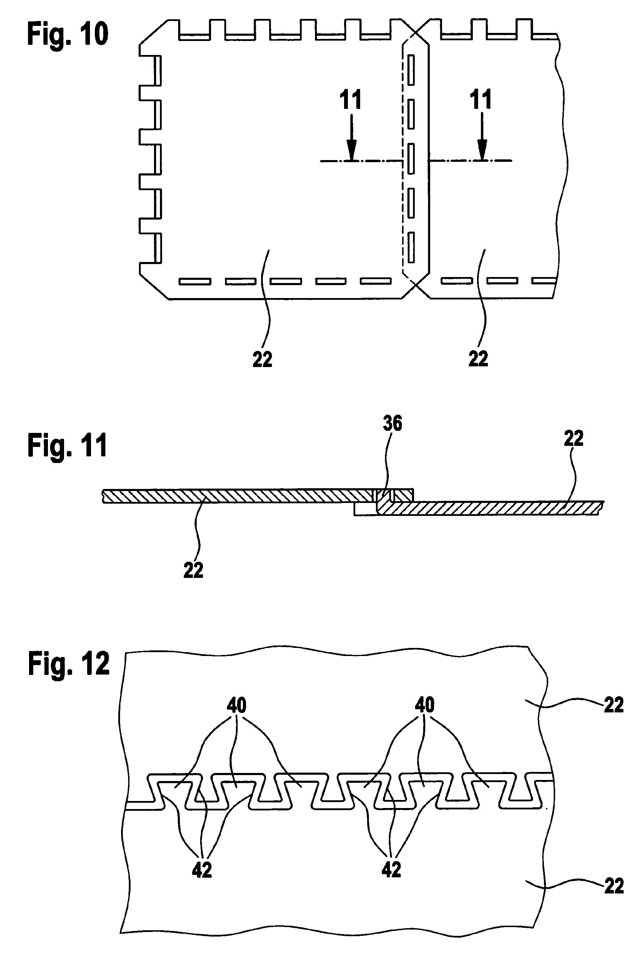

Figur 12 veranschaulicht die Verbindung von zwei benachbarten Trägern 22 durch jeweils in den Randbereichen vorgesehene, abwechselnde offen mündende komplementär schwalbenschwanzförmige Vorsprünge 40 und Aussparungen 42.

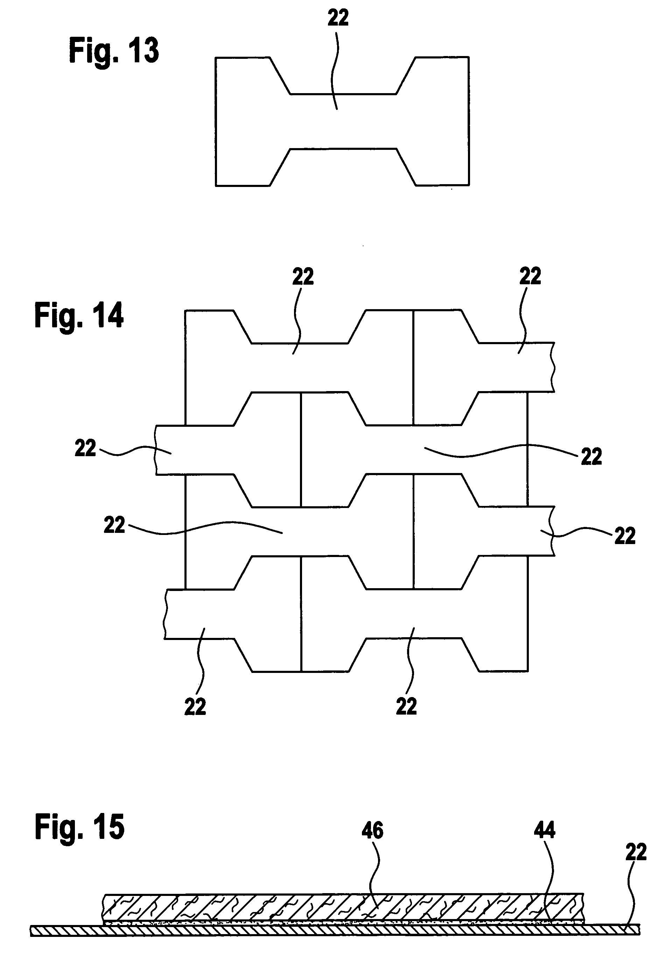

Figur 13 zeigt in der Draufsicht einen Träger 22, der eine bei den zum Beispiel zur Erstellung von Garageneinfahrten und Fußwegen häufig verwendeten Verbund-Pflastersteinen ähnliche Knochenform aufweist. Diese Träger 22 sind in der in Figur 14 veranschaulichten Weise zu größeren Trägerflächen zusammensetzbar, welche zumindest in der - bezogen auf Figur 14 - horizontalen Richtung im Verbund formschlüssig gegen Auseinanderziehen bzw. Zusammenschieben durch Zug- oder Druckkräfte gehalten sind. Eine zusätzliche Verbindung der Trägerelemente in der im Zusammenhang mit den Figuren 4 bis 8 beschriebenen Weise kann dann zweckmäßig sein, wenn auch in senkrechter Richtung Zugbeanspruchungen in der Trägerfläche zu erwarten sind.

In Figur 15 ist schließlich noch als weiteres Ausführungsbeispiel ein Träger 22 gezeigt, auf den mittels einer dünnen, aber hoch beanspruchbaren Kleberschicht 44 ein hartes druck- und zugfestes Plattenmaterial 46 fest haftend aufgebracht ist, welches auf seiner trägerabgewandten Oberseite eine für die haftende Verlegung von Platten- oder Fliesenbelägen geeignet ausgebildete Oberfächenstrukturierung aufweist. Als Plattenmaterial 46 kommen hier faserverstärkte Hartplatten, wie Gips-Faserplatten, Recycling-Faserplatten etc. in Frage.

Es ist ersichtlich, dass im Rahmen des Erfindungsgedankens Abwandlungen und Weiterbildungen der vorstehend beschriebenen Ausführungsbeispiele verwirklichbar sind, die sich beispielsweise auf die Verlegung und Fixierung von Leitungen für Fußbodenheizungen oder -kühlung durch elektrische Widerstandsheizleitungen oder von flüssigen Wärmeträgermedien durchströmten Rohr- oder Schlauchleitungen beziehen. Für die Verlegung solcher Leitungen können neben den ohnehin vorgesehenen Verzahnungslappen auch gesonderte Haltezungen oder - lappen entweder integral aus dem Trägermaterial geformt oder - bevorzugt - mittels eines geeigneten abbindenden oder aushärtenden Haftvermittlers oder Kontaktmittels auf dem Träger angeordnet werden, an oder in welchen dann auch - vor der Aufbringung des eigentlichen Belags - die - gegebenenfalls - zusätzlich durch Halteklipps im vorgesehenen Verlegungsmuster eingebrachten Leitungen fixiert werden können.

## Patentansprüche

1. Bewehrungsanordnung für den Aufbau von steifen, hoch belastbaren Belägen auf großflächigen Untergründen, insbesondere Platten- oder Fliesenbelägen (14) mit zwischen der Unterseite der Beläge und dem Untergrund vorzusehenden Bewehrungselementen, die jeweils wenigstens einen im Wesentlichen ebenflächigen Träger (22) aus dünnem metallischem Bandmaterial oder Blech aufweisen, auf dessen einer Flachseite Verankerungsmittel vorgesehen sind, welche eine form- und/oder stoffschlüssig festhaftende Verbindung mit einer zunächst in bildsamem Zustand befindlichen Mörtel- oder Kleber-Zwischenschicht (20) nach deren Abbinden gewährleisten,
**dadurch gekennzeichnet,**
**dass** die Verankerungsmittel auf der dem aufzubringenden Belag zugewandten Oberseite des im Wesentlichen ebenflächigen Trägers (22) vorgesehen sind.

2. Bewehrungsanordnung nach Anspruch 1, **dadurch gekennzeichnet, dass** die Verankerungsmittel von einer Vielzahl von in regelmäßiger oder unregelmäßiger Verteilung voneinander beabstandet von der Oberseite des im Wesentlichen ebenflächigen Trägers (22) vortretenden Vorsprüngen (z.B. 24) gebildet werden.

3. Bewehrungsanordnung nach Anspruch 2, **dadurch gekennzeichnet, dass** die Vorsprünge von von der Oberseite des im Wesentlichen ebenflächigen Trägers vortretenden Verzahnungslappen (24) aus dünnem metallischen Bandmaterial oder Blech gebildet werden.

4. Bewehrungsanordnung nach Anspruch 3, **dadurch gekennzeichnet, dass** die Verzahnungslappen (24) von entlang des größeren Teils ihrer Ränder aus dem Material des Trägers (22) freigestanzten und entlang einer Biegelinie (26) im nicht frei gestanzten Bereich hochgebogenen Abschnitten des Materials des Trägers (22) selbst gebildet sind.

5. Bewehrungsanordnung nach Anspruch 4, **dadurch gekennzeichnet, dass** die Verzahnungslappen (24) um einen Winkel von weniger als 90° in Bezug auf die Oberseite des im Wesentlichen ebenflächigen Trägers (22) hochgebogen sind.

6. Bewehrungsanordnung nach Anspruch 4 oder 5, **dadurch gekennzeichnet, dass** die Verzahnungslappen (24) um Biegelinien (26) hochgebogen sind, die in Bezug auf die Biegelinien (26) benachbarter Verzahnungslappen (24) unter einem Winkel verlaufen.

7. Bewehrungsanordnung nach einem der Ansprüche 4 bis 6, **dadurch gekennzeichnet, dass** Halterungszungen für die Festlegung von auf der Oberseite der Träger zu fixierenden Leitungen (28) vorgesehen sind.

8. Bewehrungsanordnung nach Anspruch 7, **dadurch gekennzeichnet, dass** die Verzahnungslappen zur Fixierung von Leitungen auf der Oberseite der Träger geeignet ausgebildet sind.

9. Bewehrungsanordnung nach Anspruch 7, **dadurch gekennzeichnet, dass** zusätzlich zu den Verzahnungslappen Haltezungen zur Fixierung von Leitungen auf der Oberseite vorgesehen sind.

10. Bewehrungsanordnung nach Anspruch 8 oder 9, **dadurch gekennzeichnet, dass** zusätzlich zu den Verzahnungslappen bzw. Halterungszungen gesonderte Klipphalter zur Fixierung der Leitungen vorgesehen sind.

11. Bewehrungsanordnung nach einem der Ansprüche 1 bis 10, **dadurch gekennzeichnet, dass** die im Wesentlichen ebenflächigen Träger (22) jeweils in der Draufsicht so begrenzt sind, dass sie mit im Wesentlichen fugenlos aneinander anliegenden Begrenzungsrändern zu Trägerflächen von wählbarer Größe zusammenlegbar sind.

12. Bewehrungsanordnung nach Anspruch 11, **gekennzeichnet durch** Mittel zur in der Ebene der Trägerfläche zugbeanspruchbaren Verbindung der Rand-Begrenzungsbereiche von jeweils benachbarten, zu einer größeren Trägerfläche zusammenlegbaren Trägern (22).

13. Bewehrungsanordnung nach Anspruch 12, **dadurch gekennzeichnet, dass** die Rand-Begrenzungsbereiche der Träger (22) mit in Formschluss mit benachbartem anzulegenden Trägern (22) bringbaren, komplementär geformten Ansätzen (40) und Aussparungen (42) versehen sind.

14. Bewehrungsanordnung nach Anspruch 13, **dadurch gekennzeichnet, dass** in den Randbereichen der Träger (22) jeweils zum benachbart anzulegenden Träger offene Aussparungen oder geschlossene Durchgangsöffnungen (30) vorgesehen sind, in welche jeweils die Ränder von benachbarten Trägern (22) formschlüssig verbindende Verbindungselemente (z.B. 32) einsetzbar sind.

15. Bewehrungsanordnung nach Anspruch 14, **dadurch gekennzeichnet, dass** die Verbindungselemente (32) über den Rändern von zwei benachbarten zu verbindenden Trägern (22) platzierbare, im Wesentlichen ebenförmigen Stegabschnitte (34) aufweisen, an deren gegenüberliegenden Enden in formschlüssigen Eingriff mit zugehörigen Aussparungen oder Durchgangsöffnungen (30) im Träger (22) einbringbare Ansätze (36) vorgesehen sind.

16. Bewehrungsanordnung nach Anspruch 15, **dadurch gekennzeichnet, dass** die Verbindungselemente die Form einer im Querschnitt im Wesentlichen U-förmigen Klammer (32) mit von den Enden des Stegabschnitts (34) im Wesentlichen rechtwinklig umgekanteten kurzen U-Schenkel (36) haben.

17. Bewehrungsanordnung nach Anspruch 15, **dadurch gekennzeichnet, dass** der im Wesentlichen ebenflächige Stegabschnitt (34) sich über wenigstens einen Teil der Länge der Ränder von zwei benachbarten zu verbindenen Trägern (22) erstreckt, und dass von den Rändern des Stegabschnitts (34) eine Anzahl von in dessen Längsrichtung beabstandeten kurzen umgekanteten U-Schenkeln (36) vorgesehen sind, welche in jeweils eine zugehörige Durchgangsöffnung (30) im Randbereich des zugeordneten Trägers (22) in formschlüssigen Eingriff bringbar sind.

18. Bewehrungsanordnung nach einem der Ansprüche 1 bis 10, **dadurch gekennzeichnet, dass** die Träger (22) der Bewehrungselemente im Wesentlichen rechteckig oder quadratisch begrenzt sind und in zwei Randbereichen mit jeweils einer Anzahl von in gleichmäßiger Teilung angeordneten vorstehenden Ansätzen und in den beiden anderen Randbereiche mit jeweils einer Anzahl von in gleicher Teilung vorgesehenen, die Ansätze im Randbereich des Trägers (22) eines mit dem Bewehrungselements zu einer größeren Trägerfläche zu verbindenden weiteren Bewehrungselements passend aufnehmenden Durchgangsöffnungen versehen (30) sind.

19. Bewehrungsanordnung nach Ansruch 18, **dadurch gekennzeichnet, dass** die Ansätze von an gegenüberliegenden Enden aus dem jeweiligen Randbereich freigeschnittenen und anschlieβend hochgekanteten Lappen (36) gebildet werden.

20. Bewehrungsanordnung nach Ansruch 19, **dadurch gekennzeichnet, dass** die Durchgangsöffnungen von im jeweiligen Randbereich eingestanzten Schlitzen (30) gebildet werden.

21. Bewehrungsanordnung nach einem der Ansprüche 18 bis 20, **dadurch gekennzeichnet, dass** das Material der Träger (22) im Bereich von jeweils rechtwinklig zueinander verlaufenden Begrenzungskanten der Träger (22) gebildeten Ecken unter einem Winkel von 45⁰ abgeschnitten ist.

22. Bewehrungsanordnung nach Anspruch 1 oder 2, **dadurch gekennzeichnet, dass** die Verankerungsmittel von einem Muster von aus dem Material der Träger (22) rechtwinklig zu deren Flachseiten hochgeprägten Profilvorsprüngen gebildet werden.

23. Bewehrungsanordnung nach Anspruch 2, **dadurch gekennzeichnet, dass** die von der Oberseite der Träger (22) vortretenden Vorsprünge von jeweils gesondert hergestellten, fest haftend auf der Oberseite des Trägers (22) angeordneten Verankerungselemente gebildet werden.

24. Bewehrungsanordnung nach Anspruch 23, **dadurch gekennzeichnet, dass** die Verankerungselemente in einer ausgehärteten oder abgebundenen, auf der Oberseite des Trägers (22) in fließfähigem Zustand aufgebrachten Schicht eines Haftvermittlers verankert sind.

25. Bewehrungsanordnung nach Anspruch 24, **dadurch gekennzeichnet, dass** die Verankerungselemente von mineralischen oder metallischen Partikeln oder Teilchen gebildet werden, welche teilweise über die Oberfläche des ausgehärteten oder abgebundenen Haftvermittlers vortreten.

26. Bewehrungsanordnung nach einem der Ansprüche 23 bis 25, **dadurch gekennzeichnet, dass** zusätzlich zu den mittels eines Haftvermittlers festhaftend auf dem Träger verankerten Verankerungselemente gesonderte Haltelappen oder -zungen zur Halterung von Leitungen mittels eines Haftvermittlers auf dem Träger aufgebracht sind.

27. Bewehrungsanordnung nach Anspruch 26, **dadurch gekennzeichnet, dass** den gesonderten Haltelappen oder -zungen Klipphalter zur Fixierung der aufgebrachten Leitungen zugeordnet sind.

28. Bewehrungsanordnung nach Anspruch 1, **dadurch gekennzeichnet, dass** die Verankerungsmittel von jeweils einer fest haftend auf dem jeweiligen Träger (22) aufgebrachten Lage aus hartem Plattenmaterial (46) gebildet werden, dessen trägerabgewandte Oberseite eine für die haftende Verlegung von Platten- oder Fliesenbelägen mittels abbindendem oder aushärtendem Mörtel bzw. Kleber geeignet ausgebildete Oberflächenstrukturierung aufweist.

29. Bewehrungsanordnung nach Anspruch 28, **dadurch gekennzeichnet, dass** das die Verankerungsmittel bildende harte Plattenmaterial (46) von faserverstärkten Hartplatten, unter anderem beispielsweise Gips-Faserplatten, Recycling-Faserplatten etc. gebildet wird.
